# EUROPÄISCHE PATENTSCHRIFT

(11) **EP 2 342 546 B1**
(45) Veröffentlichungstag und Bekanntmachung des Hinweises auf die Patenterteilung: **12.12.2018**
(21) Anmeldenummer: 09745016.7
(22) Anmeldetag: 27.10.2009
(51) Int. Cl.: G01L 19/00, G01N 29/12

(54) **VORRICHTUNG ZUR BESTIMMUNG UND/ODER ÜBERWACHUNG EINES DRUCKS**
DEVICE FOR DETERMINING AND/OR MONITORING A PRESSURE
DISPOSITIF DE DÉTERMINATION ET/OU DE SURVEILLANCE D'UNE PRESSION

(30) Priorität: 04.11.2008 DE 102008043467
(43) Veröffentlichungstag der Anmeldung: 13.07.2011
(73) Patentinhaber: Endress+Hauser SE+Co. KG, 79689 Maulburg (DE)
(72) Erfinder: GRITTKE, Udo, 79585 Steinen (DE); LOPATIN, Sergej, 79540 Lörrach (DE); ROßBERG, Andreas, 79713 Bad Säckingen (DE); ÜHLIN, Thomas, 79650 Schopfheim (DE); HUMPERT, Axel, 77866 Reinau (DE); SPITZ, Andreas, 79650 Schopfheim (DE); SELDERS, Peter, 79689 Maulburg (DE)
(74) Vertreter: Andres, Angelika Maria
(86) Internationale Anmeldenummer: PCT/EP2009/064129
(87) Internationale Veröffentlichungsnummer: WO 2010/052152

(56) Entgegenhaltungen:
- US-A1- 2007 073 417

## Beschreibung

Die Erfindung bezieht sich auf eine Vorrichtung zur Bestimmung und/oder Überwachung eines Drucks, mit mindestens einem Druckwandler, welcher den Druck in ein elektrisches Signal umwandelt. Weiterhin bezieht sich die Erfindung auf eine Vorrichtung zur Bestimmung und/oder Überwachung einer Prozessgröße, mit mindestens einer Sensoreinheit, welche die Prozessgröße bestimmt und/oder überwacht.

Druckmessvorrichtungen werden vielfach in der Prozessmesstechnik eingesetzt, um den Druck von Prozessmedien zu messen, bei welchen es sich um Flüssigkeiten, Gase oder Dämpfe handeln kann. Im Wesentlichen umfassen derartige Messvorrichtungen oder Drucksensoren eine Druckmesszelle oder einen Druckwandler, welche im Allgemeinen einen Grundkörper und eine elastische Membran aufweist. Der Grundkörper und die Membran bestehen je nach Ausgestaltung aus einer Keramik oder zumindest die Membran besteht zumindest teilweise aus einem Metall. Mögliche Kombinationen von Membran und Grundkörper sind beispielsweise Keramik/Keramik, Metall/Keramik oder Metall/Metall mit dielektrischen Elementen bestehend aus der Keramik oder einem Glas. Das Lötverfahren von Metall auf Keramik ist bekannt und kann beispielsweise für eine Kombination Titan/Aluminiumoxidkeramik (oder Sonderlegierungen wie Kovar anstelle des Titan) realisiert werden. Es lässt sich beispielsweise auch eine dielektrische Keramik aus Aluminiumtitanat mit sehr geringem Ausdehnungskoeffizienten mit einer Nickellegierung Invar oder einer Siliziumkarbidkeramik im Lötverfahren kombinieren. Eine andere Ausgestaltung besteht in einer auf einen Edelstahlgrundkörper geschweißten Edelstahlmembran. Im Grundkörper wird vorzugsweise bei dieser Ausgestaltung ein Raum für ein Isolierelement mit den Messelektroden vorgesehen. Am Grundkörper ist zumeist eine flache Ausnehmung vorgesehen, welche auch als Membranbett bezeichnet und von der Membran überdeckt wird. Im Messbetrieb wird die Membran mit dem Druck des Prozessmediums beaufschlagt, und die Verformung oder die mechanische Spannung in der elastischen Membran, welche beispielsweise kapazitiv oder piezoresistiv ermittelt wird, ist ein Maß für den Druck (siehe z.B. die Offenlegungsschrift DE 39 01 492).

Bei Keramikzellen solcher Drucktransmitter kann eine Rissbildung in der Membran Ursache für das Versagen der Zelle sein. Die Dicke solcher Membranen ist vom Messbereich des Drucks abhängig und liegt zumeist zwischen etwa 0,1 und 2 mm. Es ist bekannt, dass im Gegensatz zu Metallen keramische Werkstoffe aufgrund ihrer Sprödigkeit und der daraus resultierenden mangelnden plastischen Verformbarkeit sehr schnell brechen können, wenn die mechanische Spannung die Bruchgrenze erreicht. Die Ursache für einen Bruch der Membran können mikroskopische Risse in der Keramik sein, die unter Belastung ein überkritisches Wachstum erreicht haben. Bei manchen Fertigungsschritten, z.B. der Hartbearbeitung, können Risse induziert werden, welche jedoch aufgrund ihrer Größe nicht erkannt werden können. Eine weitere Ursache für kritisches Risswachstum kann eine lokale Überlast der Bauteile aufgrund einer ungünstigen Kombination des thermischen Gradienten während eines Temperaturschocks bei gleichzeitiger Druck- oder Vakuumbelastung sein. Die Messzellen können somit in Anwendungen mechanisch und thermisch überbelastet werden und reagieren darauf mit Risswachstum. Risse werden im Extremfall durch eine damit einhergehende Leckage erkannt, wodurch teilweise aufwendige Wartungsmaßnahmen erforderlich sind. Bei metallischen Membranen ist es weiterhin möglich, dass es durch Überdruck zu einer plastischen Verformung kommt, welche zu einer deutlichen Messabweichung führt. Im Stand der Technik ist beispielsweise für das Erkennen eines Membranbruchs die Verwendung einer Opfermembran vorgeschlagen, welche durch einen Korrosionsangriff oder andere kritische Ereignisse beschädigt wird. Der Ausfall der Opferzelle dient als ein Zeichen, dass die Messzelle auch beschädigt ist oder kurz vor der Beschädigung steht.

Die Offenlegungsschrift US 2007/0073417 A1 beschreibt einen Drucksensor, welcher mit einem akustischen Sensor gekoppelt ist, dessen Ausgangssignal mit dem des Drucksensors kombiniert wird. Der akustische Sensor misst den Druck einer Flüssigkeit an Hand der druckabhängigen Propagationszeit akustischer Signale in Flüssigkeiten.

Der Erfindung liegt die Aufgabe zugrunde, einen Drucktransmitter vorzuschlagen, bei welchem ein Bruch der Membran bzw. eine plastische Verformung erkannt wird. Die Aufgabe wird erfindungsgemäß durch die Vorrichtung gemäß Anspruch 1 gelöst.

Die erfindungsgemäße Vorrichtung zur Bestimmung und Überwachung eines Drucks umfasst mindestens einen Druckwandler, welcher den Druck in ein elektrisches Signal umwandelt, wobei der Druckwandler mindestens eine Membran aufweist, welche mit dem Druck beaufschlagbar ist, wobei mindestens ein akustischer Sensor vorgesehen ist, welcher akustische Signale aufnimmt und in elektrische Signale umwandelt, wobei der akustische Sensor mechanisch und/oder akustisch mit dem Druckwandler gekoppelt ist, wobei mindestens eine Auswerteeinheit vorgesehen ist, welche die elektrischen Signale des akustischen Sensors in Hinsicht auf eine Brucherkennung oder auf eine plastische Verformung der Membran des Druckwandlers auswertet.

Im erfindungsgemäßen Drucktransmitter wird somit ein bereits bekannter Drucksensor durch einen akustischen Sensor erweitert. Der Druckwandler besteht dabei zumindest teilweise aus einer Keramik und/oder aus einem Metall. Durch den zusätzlichen Sensor wird dabei eine akustische Diagnostik vorgenommen, welche sich entweder auf den Bruch oder auf die plastische Verformung bezieht. Es hat sich insbesondere gezeigt, dass keramische Werkstoffe, wie Aluminiumoxidkeramik oder Zirkonoxidkeramik kurz vor einem vollständigen Bruch einer Membran deutliche akustische Signale erzeugen. Solche Signale stammen aus mikroskopischen Brüchen in den Keramikkörnern und werden erfindungsgemäß mit einem akustischen Sensor aufgenommen. Die Frequenz der Signale liegt eventuell in einem Bereich zwischen 50 kHz und 3 MHz. In einer Ausgestaltung wird der akustische Sensor auf dem Grundkörper des Druckwandlers befestigt. Die eigentliche Befestigungsposition des akustischen Sensors ist unkritisch, da die akustischen Signale der genannten Frequenzen sich insbesondere in dem Fall eines keramischen Grundkörpers gut in einem solchen Keramikkörper ausbreiten.

In der Anwendung ist die Membran dem zu messenden Prozessdruck bzw. dem Medium ausgesetzt. Die Membran besteht dabei insbesondere in einer Ausgestaltung aus einer Keramik. In einer weiteren Ausgestaltung besteht die Membran aus einem Metall.

Eine Ausgestaltung sieht vor, dass die Auswerteeinheit die elektrischen Signale des akustischen Sensors in Hinsicht auf eine Brucherkennung der Membran des Druckwandlers auswertet. Diese Ausgestaltung bezieht sich insbesondere auf Keramikmembranen.

Eine Ausgestaltung sieht vor, dass die Auswerteeinheit die elektrischen Signale des akustischen Sensors in Hinsicht auf eine plastische Verformung der Membran des Druckwandlers auswertet. Diese Ausgestaltung bezieht sich insbesondere auf Metallmembranen.

Die Auswerteeinheit ist dabei in einer Ausgestaltung ein Bestandteil der Elektronik, mit welcher der Druckwandler verbunden ist. Die Auswerteeinheit kann jedoch auch eine übergeordnete Einheit, z.B. innerhalb einer Leitwarte sein. In einer Ausgestaltung werden die Signale und/oder deren Fouriertransformierte Spektren in Hinsicht auf die auftretenden Frequenzen und/oder Signalgruppen und/oder Einzelsignale ausgewertet.

Eine Ausgestaltung beinhaltet, dass die Auswerteeinheit die elektrischen Signale des akustischen Sensors derartig auswertet, dass die Auswerteeinheit zumindest das Auftreten mindestens einer charakteristischen Frequenz und/oder mindestens einer charakteristischen Signalgruppe und/oder mindestens eines charakteristischen Einzelsignals in den elektrischen Signalen des akustischen Sensors erkennt und als Bruch oder plastische Verformung der Membran bewertet. Wie oben bereits ausgeführt, führen die Brüche in der Membran bzw. das plastische Verformen dieser zu besonderen Signalen, welche vom akustischen Sensor aufgenommen werden. Diese Signale innerhalb der elektronischen Signale des akustischen Sensors zeichnen sich beispielsweise durch charakteristische Frequenzen oder charakteristische Signalgruppen oder charakteristische Einzelsignale aus. Die elektronischen (Mess-)Signale des akustischen Sensors werden dabei beispielsweise durch eine Fourier-Transformation bzw. in Verbindung mit einem Bandpass-Filter ausgewertet. Somit ergibt sich beim Fall der Fourier-Transformation aus dem Signal des akustischen Sensors ein Spektrum, in welchem nach charakteristischen Signalen oder Frequenzen gesucht wird. Das Spektrum muss die kurzen Signale mit einer bestimmten Dauer einschließen. Die Mikrobrüche dauern nicht lang und diese Dauer entspricht den oben genannten Frequenzen von 50 kHz bis 3 MHz. Da zumeist die normalen Umgebungs-Rauschsignale in diesem Frequenzbereich sehr schwach sind, lassen sich dadurch die starken charakteristischen Signale erkennen und auswerten.

Eine Ausgestaltung sieht vor, dass die Auswerteeinheit das zeitliche Verhalten der elektrischen Signale des akustischen Sensors auswertet. In dieser Ausgestaltung werden die Signale des akustischen Sensors in Hinsicht auf eine Vorhersage, also im Sinne der predictive maintenance ausgewertet, d.h. die einzelnen Signale des akustischen Sensors werden in Bezug auf zeitliche Entwicklungen oder Tendenzen ausgewertet. Dabei werden in einer Ausgestaltung die elektrischen Signale selbst ausgewertet und in einer weiteren Ausgestaltung werden die charakteristischen Einzelsignale oder Signalgruppen ausgewertet und in Bezug auf die zeitliche Entwicklung bewertet.

Eine Ausgestaltung beinhaltet, dass der Druckwandler mindestens einen Grundkörper aufweist, dass die Membran mit einer Seite des Grundkörpers verbunden ist, und dass der akustische Sensor auf einer von der Membran abgewandten Seite des Grundkörpers aufgebracht ist.

Eine Ausgestaltung sieht vor, dass es sich bei dem Druckwandler um einen kapazitiven Druckwandler handelt.

Die Erfindung wird anhand der nachfolgenden Zeichnung näher erläutert. Es zeigt:

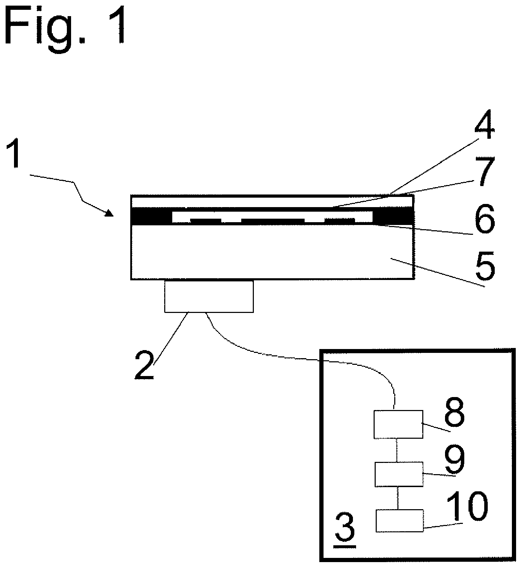

Fig. 1: eine schematische Darstellung eines erfindungsgemäßen Druckmessgerätes.

In der Fig. 1 ist schematisch ein keramischer Druckwandler 1 dargestellt, auf dessen keramischen Grundkörper 5 ein akustischer Sensor 2 aufgebracht ist. Der Druckwandler 1 dient dabei in dieser Ausgestaltung der kapazitiven Druckmessung, indem der auf der keramischen Membran 4 lastende Prozessdruck den Abstand zwischen den Messelektroden 6 und der Gegenelektrode 7 verändert und somit auch die Kapazitäten der entsprechenden Kondensatoren beeinflusst.

Der akustische Sensor 2 misst insbesondere den Körperschall des Grundkörpers 5 und erzeugt daraus elektrische (Mess-)Signale, welche von der Auswerteeinheit 3 ausgewertet werden.

Die Auswerteeinheit 3 umfasst hier zumindest folgende Komponenten: ein Bandpass 8, welcher in dieser Ausgestaltungen nur Frequenzen innerhalb eines Bands zwischen 50 kHz und 3 MHz durchlässt und dabei die Rauschsignale herausfiltert; ein Verstärker 9, welcher die gefilterten Signale verstärkt und konditioniert, und schließlich beispielsweise ein Analog-DigitalWandler und ein Mikroprozessor, welcher als Detektor der akustischen Emission dient und nach bestimmten Regeln die akustische Emission in der keramischen Zelle erkennt und beispielsweise einen Alarmausgang bedient.

### Bezugszeichenliste

- 1: Druckwandler
- 2: Akustischer Sensor
- 3: Auswerteeinheit
- 4: Membran
- 5: Grundkörper
- 6: Messelektrode
- 7: Gegenelektrode
- 8: Bandpass
- 9: Verstärker
- 10: Mikroprozessor

## Patentansprüche

1. Vorrichtung zur Bestimmung und/oder Überwachung eines Drucks, mit mindestens einem Druckwandler (1), welcher den Druck in ein elektrisches Signal umwandelt, wobei der Druckwandler (1) mindestens eine Membran (4) aufweist, welche mit dem Druck beaufschlagbar ist, wobei mindestens ein akustischer Sensor (2) vorgesehen ist, welcher akustische Signale aufnimmt und in elektrische Signale umwandelt, und welcher mechanisch und/oder akustisch mit dem Druckwandler (1) gekoppelt ist und wobei mindestens eine Auswerteeinheit (3) vorgesehen ist, wobei die Auswerteeinheit (3) die elektrischen Signale des akustischen Sensors (2) auswertet,
**dadurch gekennzeichnet,**
**dass** die Auswerteeinheit (3) die elektrischen Signale des akustischen Sensors (2) in Hinsicht auf eine Brucherkennung oder eine plastische Verformung der Membran (4) des Druckwandlers (1) auswertet.

2. Vorrichtung nach Anspruch 1,
**dadurch gekennzeichnet,**
**dass** die Auswerteeinheit (3) die elektrischen Signale des akustischen Sensors (2) derartig auswertet, dass die Auswerteeinheit (3) zumindest das Auftreten mindestens einer charakteristischen Frequenz und/oder mindestens einer charakteristischen Signalgruppe und/oder mindestens eines charakteristischen Einzelsignals in den elektrischen Signalen des akustischen Sensors (2) erkennt und als Bruch oder plastische Verformung der Membran (4) bewertet.

3. Vorrichtung nach Anspruch 1,
**dadurch gekennzeichnet,**
**dass** die Auswerteeinheit (3) das zeitliche Verhalten der elektrischen Signale des akustischen Sensors (2) auswertet.

4. Vorrichtung nach einem der Ansprüche 1 bis 3,
**dadurch gekennzeichnet,**
**dass** der Druckwandler (1) mindestens einen Grundkörper (5) aufweist, dass die Membran (4) mit einer Seite des Grundkörpers (5) verbunden ist, und
**dass** der akustische Sensor (2) auf einer von der Membran (4) abgewandten Seite des Grundkörpers (5) aufgebracht ist.

5. Vorrichtung nach einem der Ansprüche 1 bis 4,
**dadurch gekennzeichnet,**
**dass** es sich bei dem Druckwandler (1) um einen kapazitiven Druckwandler handelt.

## Claims

1. Apparatus for determining and/or monitoring a pressure, with at least one pressure converter (1), which converts the pressure into an electrical signal, wherein the pressure converter (1) has at least one membrane (4) which can be exposed to the pressure,
wherein at least one acoustic sensor (2) is provided which captures acoustic signals and converts them to electrical signals and which is coupled mechanically and/or acoustically with the pressure converter (1) and wherein at least one evaluation unit (3) is provided, wherein the evaluation unit (3) evaluates the electrical signals of the acoustic sensor (2),
**characterized in that**
the evaluation unit (3) evaluates the electrical signals of the acoustic sensor (2) with regard to rupture detection or a plastic deformation of the membrane (4) of the pressure converter (1).

2. Apparatus as claimed in Claim 1,
**characterized in that**
the evaluation unit (3) evaluates the electrical signals of the acoustic sensor (2) in such a way that the evaluation unit (3) at least detects at least the occurrence of at least one characteristic frequency and/or at least one characteristic signal group and/or at least one characteristic individual signal in the electrical signals of the acoustic sensor (2), and interprets this as a rupture or plastic deformation of the membrane (4).

3. Apparatus as claimed in Claim 1,
**characterized in that**
the evaluation unit (3) interprets the behavior over time of the electrical signals of the acoustic sensor (2).

4. Apparatus as claimed in one of the Claims 1 to 3,
**characterized in that**
the pressure converter (1) has at least one meter body (5),
and **in that** the membrane (4) is connected to one side of the meter body (5), and
**in that** the acoustic sensor (2) is fitted on a side of the meter body (5) facing away from the membrane (4).

5. Apparatus as claimed in one of the Claims 1 to 4,
**characterized in that**
the pressure converter (1) is a capacitive pressure converter.

## Revendications

1. Dispositif destiné à la détermination et/ou la surveillance d'une pression, avec au moins un convertisseur de pression (1), lequel convertit la pression en un signal électrique, le convertisseur de pression (1) comportant au moins une membrane (4) pouvant être soumise à la pression,
dispositif pour lequel est prévu au moins un capteur acoustique, lequel capteur enregistre des signaux acoustiques et les convertit en signaux électriques, et lequel capteur est couplé mécaniquement et/ou acoustiquement avec le convertisseur de pression (1),
et dispositif pour lequel est prévue une unité d'exploitation (3), l'unité d'exploitation (3) exploitant les signaux électriques du capteur acoustique (2),
**caractérisé**
**en ce que** l'unité d'exploitation (3) exploite les signaux électriques du capteur acoustique (2) par rapport à une détection de rupture ou une déformation plastique de la membrane (4) du convertisseur de pression (1).

2. Dispositif selon la revendication 1,
**caractérisé**
**en ce que** l'unité d'exploitation (3) exploite les signaux électriques du capteur acoustique (2) de telle sorte que l'unité d'exploitation (3) détecte au moins l'apparition d'au moins une fréquence caractéristique et/ou d'au moins un groupe de signaux caractéristique et/ou d'au moins un signal individuel caractéristique parmi les signaux électriques du capteur acoustique (2), et l'interprète comme rupture ou comme déformation plastique de la membrane (4).

3. Dispositif selon la revendication 1,
**caractérisé**
**en ce que** l'unité d'exploitation (3) interprète le comportement dans le temps des signaux électriques du capteur acoustique (2).

4. Dispositif selon l'une des revendications 1 à 3,
**caractérisé**
**en ce que** le convertisseur de pression (1) comporte au moins un corps de base (5),
**en ce que** la membrane (4) est reliée avec un côté du corps de base (5),
et
**en ce que** le capteur acoustique (2) est monté sur un côté du corps de base (5) situé à l'opposé de la membrane (4).

5. Dispositif selon l'une des revendications 1 à 4,
**caractérisé**
**en ce que**, concernant le convertisseur de pression (1), il s'agit d'un convertisseur de pression capacitif.
